# EUROPÄISCHE PATENTSCHRIFT

(11) **EP 2 217 495 B1**
(45) Veröffentlichungstag und Bekanntmachung des Hinweises auf die Patenterteilung: **28.09.2011**
(21) Anmeldenummer: 08841714.2
(22) Anmeldetag: 22.10.2008
(51) Int. Cl.: B64D 11/00, H02G 3/04, H02G 3/12, B64C 1/06

(54) **TRÄGERROHR FÜR DECKENELEMENTE**
CARRIER TUBE FOR CEILING ELEMENTS
TUBE PORTEUR POUR DES ÉLÉMENTS DE PLAFOND

(30) Priorität: 25.10.2007 DE 102007051410
(43) Veröffentlichungstag der Anmeldung: 18.08.2010
(73) Patentinhaber: Airbus Operations GmbH, 21129 Hamburg (DE); ELMAKO GmbH & Co. KG, 76473 Iffezheim (DE)
(72) Erfinder: RANDERATH, Bernhard, 21706 Assel (DE); SACHSE, Andreas, 21255 Kakenstorf (DE); DAMM, Hans, 76473 Iffezheim (DE)
(74) Vertreter: Lemcke, Brommer & Partner
(86) Internationale Anmeldenummer: PCT/EP2008/008930
(87) Internationale Veröffentlichungsnummer: WO 2009/053046

(56) Entgegenhaltungen:
- DE-A1- 2 618 229
- DE-A1- 3 009 054
- DE-A1- 3 146 187
- DE-A1- 10 114 715
- DE-U1- 29 602 589

## Beschreibung

Die Erfindung betrifft ein Trägerrohr mit im Inneren des Rohres verlaufenden elektrischen Leitungen, die als Stromschienen zum Inneren des Rohres hin unisoliert innen an der Wandung des Rohres angebracht sind.

Ein solches Rohr ist z.B. aus DE 101 14 715 A1 bekannt.

Im Flugzeugbau ist es bekannt, in der Kabine eines Verkehrsflugzeuges unterschiedlichste Bestuhlungen unterzubringen. Diese Bestuhlungen unterscheiden sich je nach Klasse (First Class, Business Class oder Economy Class) und/oder je nach Luftfahrtgesellschaft in der Anzahl der je Reihe eingebauten Sitze und im unterschiedlichem Reihenabstand.

Ein besonderes Problem ergibt sich dabei, dass die Kabinen für unterschiedliche Einsatzzwecke, z.B. bei verstärktem Bedarf von First Class-Plätzen oder Business Class-Plätzen umgerüstet werden.

Oberhalb jedes Sitzes finden sich Paneele oder Deckenelemente, die Elemente enthalten wie Rufknöpfe, aufleuchtende Anschnallzeichen, Lampen etc. und auch Klappen für Sauerstoffmasken für Notfälle. Diese Elemente sind bei einem Umbau entsprechend zu den Sitzen an die geänderten Abstände anzupassen.

Zum Anschluss der genannten elektrischen Elemente ist es dabei bekannt, diese mit Kabeln anzuschließen, wobei jeweils für eine maximale Bestuhlung entsprechende Kabel und Steckverbinder vorgesehen werden. Bei einer Bestuhlung der Flugzeugkabine mit weniger Sitzen werden nur weniger Elemente angeschlossen und ein Teil der vorhandenen Verkabelung bleibt ungenutzt.

Die Verkabelung hat dabei zum einen den Nachteil, dass sie ein erhebliches Gewicht darstellt, wobei insbesondere auch zu berücksichtigen ist, dass dieses Gewicht sowohl die Nutzlast des Flugzeuges verringert und andererseits als Ballast auch den Treibstoffverbrauch negativ beeinflusst.

Des Weiteren ist es problematisch, dass die sich ergebenden Kabelbäume aufwändig verlegt werden müssen, wobei hierfür auch umfangreich Bauraum vorzusehen ist.

Nun ist es bekannt, die entsprechenden Deckenelemente an hierfür vorgesehenen Tragrohren zu befestigen, wobei diese üblicherweise als Alu-Strangpress-Profile hergestellt sind. Es sind dabei sowohl kreisrunde als auch polygonale Querschnittsformen bekannt. Teilweise werden die angesprochenen Kabel, um Raum für sie zu sparen und um ihre Verlegung zu erleichtern, innerhalb dieser Tragrohre geführt. Die üblicherweise an den Enden der Kabel vorhandenen Stecker befinden sich aber weiterhin außerhalb dieser Tragrohre. Sie können damit die Handhabung der einzelnen Deckenelemente bei ihrer Montage und Demontage entsprechend behindern.

Aufgabe der vorliegenden Erfindung ist es somit, ein Trägerrohr für Deckenelemente, insbesondere für Flugzeugkabinen, mit im Inneren des Trägerrohres verlaufenden elektrischen Leitungen dahingehend weiterzuentwickeln, dass die Konstruktion leichter wird. Gleichzeitig soll die Verbindung von innerhalb des Trägerrohres verlaufenden Leitungen mit in den Deckenelementen vorhandenen elektrischen Bauteilen vereinfacht werden.

Diese Aufgabe wird dadurch gelöst, dass am Rohr Deckenelemente, insbesondere für Flugzeugkabinen, angebracht sind.

Die Erfindung hat den Vorteil, dass die vorgesehenen Leitungen als Stromschienen nicht mehr einzeln isoliert werden müssen. Da sie an der Wandung des Trägerrohres angebracht sind, können sie ohne weiteres zueinander beabstandet gehalten werden und es besteht nicht die Gefahr von elektrischen Kurzschlüssen aufgrund der fehlenden Isolierung. Des Weiteren bedeutet der unisolierte Zustand der Leitungen bzw. Stromschienen, dass sie überall durch einen entsprechenden Stromabnehmer kontaktiert werden können. Es sind also bei einer Mehrzahl von möglichen Positionen, an denen eine entsprechende Stromabnahme erfolgen soll, nicht jeweils separate Leitungen mit an den spezifischen Positionen vorgesehenen Steckern vorzuhalten. Vielmehr ist lediglich ein passender Kontakt vorzusehen, der an der jeweils gewünschten Stelle in das Trägerrohr einzuführen und mit den dort vorgesehenen Stromschienen in Kontakt zu bringen ist. Auf diese Weise können mehrere Leitungen eingespart werden, die je nach Bedarf lediglich alternativ oder aber selektiv benutzt würden.

Bei einem bevorzugten Ausführungsbeispiel verlaufen die Stromschienen in Längsnuten der Trägerrohrwandung. Hierdurch sind die Stromschienen gut in ihrer Position zu fixieren und können mit einem passenden Stecker betriebssicher abgegriffen werden.

Bei einer weiter bevorzugten Ausführungsform sind die Stromschienen an einem Träger aus isolierendem Material angebracht, der parallel zur Längsachse des Trägerrohres in dieses eingebracht ist.

Eine derartige Konstruktion hat den Vorteil, dass einerseits kein Kurzschluss zwischen den Stromschienen und dem Trägerrohr auftreten kann. Zum anderen können die Stromschienen vorzugsweise auch außerhalb des Trägerrohres an dem Träger angebracht werden. Damit wird die Fertigung erleichtert, da mehrere Stromschienen an einem Träger zu befestigen sind und dann nur ein Träger in das Trägerrohr einzusetzen ist.

Es hat sich dabei als vorteilhaft herausgestellt, dass der Träger selbst eine im Wesentlichen flächige Gestalt hat und für ihn eine entsprechende Aufnahme im Trägerrohr vorgesehen ist, in die der Träger unter seiner elastischen Verformung einsetzbar ist.

Diese Konstruktion ist ebenfalls unter fertigungstechnischen Gesichtspunkten als sehr vorteilhaft anzusehen.

Für eine leichtere Montage kann dabei das Trägerrohr einen Längsschlitz aufweisen. Durch diesen hindurch ist auch ein mit den Stromschienen korrespondierende Anschlussstecker oder Stromabnehmer leicht in das Innere des Rohres hineinzuführen.

Vorzugsweise sind dann parallel zu diesem Längsschlitz entsprechende Fixierschienen vorgesehen, über die Mittels Klemmklötzen Deckenelementbefestigungselemente an dem Rohr befestigt sind.

Obwohl es im Rahmen der Erfindung ist, das vorgesehene Trägerrohr aus Aluminium herzustellen, wird es aus Gründen der Gewichtsersparnis bevorzugt, das Trägerrohr aus faserverstärktem Kunststoff herzustellen.

Weitere Vorteile und Merkmale der Erfindung ergeben sich aus der nachfolgenden Beschreibung von Ausführungsbeispielen. Dabei zeigt:
- Figur 1: ein Trägerrohr mit in die Wandung integrierten Stromschienen;
- Figur 2: ein Trägerrohr mit einem die Stromschienen haltenden Trägereinsatz;
- Figur 3: die Prinzipskizze eines Stromabnehmers.

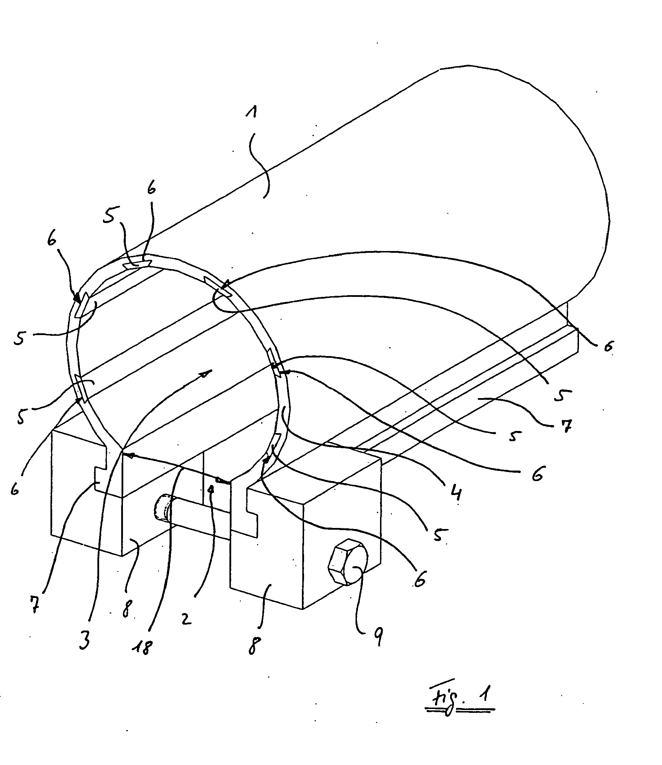

In Figur 1 erkennt man die perspektivische Darstellung eines Trägerrohres 1, an dem z.B. in einer Flugzeugkabine Deckenelemente befestigt werden. Das hier dargestellte Trägerrohr hat einen im Wesentlichen Ω-förmigen Querschnitt mit einem im Wesentlichen kreisrunden Abschnitt und einem sich nach unten öffnenden Schlitzbereich 2, mit dem sich das Innere 3 des Trägerrohres nach außen öffnet. Im kreisrunden Abschnitt des Trägerrohres 1 befinden sich in der Wand 4 über den Umfang verteilt mehrere parallel zueinander und zur Längsachse des Trägerrohres 1 verlaufende Stromschienen 5, die zum Inneren 3 des Trägerrohres 1 hin unisoliert sind. Diese zum Inneren 3 hin gewandten Oberflächen der Stromschienen sind vergoldet, während die Stromschiene selbst insbesondere aus Kupfer ist.

Grundsätzlich ist es aber auch möglich, die Stromschiene aus einem anderen gut elektrisch leitenden Material zu fertigen und auch eine Vergoldung ist nicht notwendig, soweit auf andere Weise eine Oxydierung der metallischen Oberfläche der Stromschiene 5 verhindert ist.

Die Wandung 4 des Trägerrohres 1 besteht im hier dargestellten Beispiel insbesondere aus faserverstärktem Kunststoff. Es ist aber auch möglich, hier ein Metall wie beispielsweise Aluminium vorzusehen und dieses mit einer elektrisch nicht leitenden Beschichtung zu versehen, so dass es zwischen den einzelnen Stromschienen 5 nicht zu elektrischen Kurzschlüssen kommen kann.

Es ist außerdem in der Figur 1 zu erkennen, dass die Stromschienen 5 in Nuten 6 eingesetzt sind, die in die Wandung 4 des Trägerrohres 1 eingeformt sind. Die Nuten 6 haben dabei Hinterschneidungen, so dass die Stromschienen 5 formschlüssig in diesen Nuten gehalten werden.

Die parallel zum Schlitzbereich 2 des Trägerrohres liegenden Kanten sind im hier dargestellten Beispiel mit parallel zu dem genannten Längsschlitz verlaufenden Fixierschienen 7 versehen. Auf diesen Fixierschienen kann über Klemmklötze 8 ein beliebiges Element befestigt werden, wie beispielsweise ein Schnappverschluss oder ein Scharnier für ein Deckenelement, das an dem Trägerrohr 1 zu befestigen ist.

Es sind jeweils 2 Klemmklötze 8 einander zugeordnet und mittels einer Klemmschraube 9 verbunden. Anstelle einer Klemmschraube können auch andere Verbindungselemente verwandt werden. Beispielsweise ist auch der Einsatz von Zugfedern o.ä. möglich.

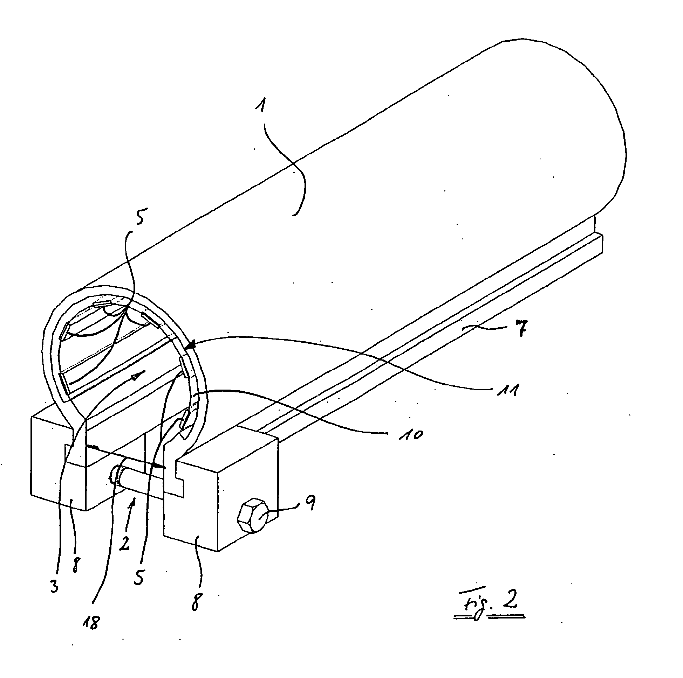

In der Figur 2 ist eine vergleichbare Konstruktion wie in Figur 1 dargestellt. Man erkennt wiederum ein Trägerrohr 1 mit in dessen Inneren 3 angeordneten Stromschienen 5. In dem in Figur 2 dargestellten Beispiel sind diese Stromschienen 5 aber auf einem Träger 10 aufgebracht. Dieser besteht aus einem isolierenden Material, wie es beispielsweise als verformbare Leiterplatte zur Anwendung kommt.

Dieser Träger hat im Wesentlichen eine flächige Gestalt und wird in eine parallel zur Längsachse des Trägerrohres 1 verlaufende Ausnehmung 11 des Trägerrohres 1 eingesetzt. Dabei legt der Träger 10 sich aufgrund seiner Eigenspannung, die aus seiner beim Einsetzen stattfindenden Verformung resultiert, an die Wandung dieser Ausnehmung 11 an und ist so im Wesentlichen kraftschlüssig innerhalb des Trägerrohres 1 gehalten.

Es besteht dabei die Möglichkeit, den Träger 10 auch innerhalb dieser Ausnehmung 11 des Trägerrohres 1 zu verkleben.

Im Übrigen ist auch das in der Figur 2 dargestellte Trägerrohr mit entsprechenden Fixierschienen 7 und mit diesen korrespondierenden Klemmklötzen 8 versehen, die wiederum über eine Klemmschraube 9 miteinander verbunden sind.

Die Stromschienen, die bei dem Trägerrohr gemäß der Figur 2 zum Einsatz kommen, haben eine Querschnittsfläche von etwa 0,5 mm² so dass über sie ein den üblichen Anforderungen genügender Strom geleitet werden kann.

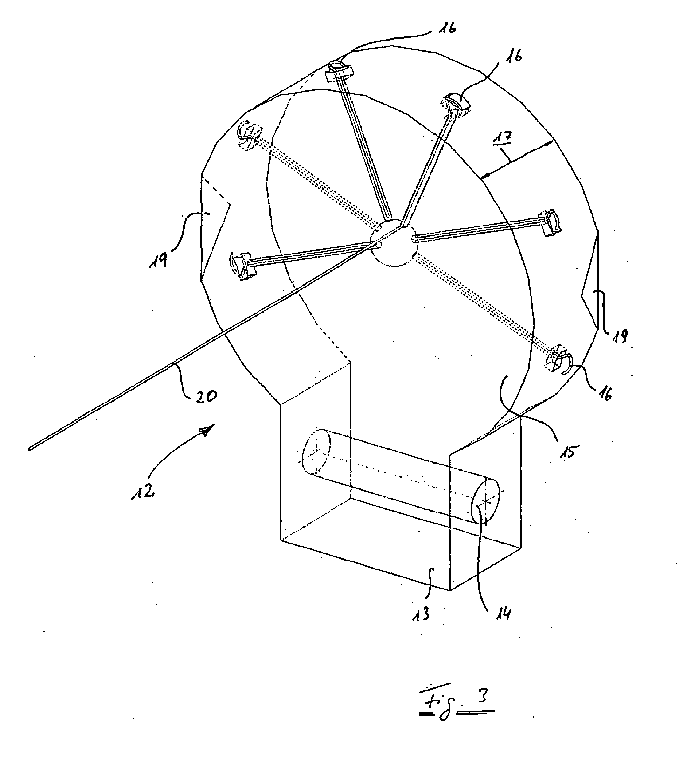

Um diesen Strom aus dem Trägerrohr zu entnehmen, wird ein Stromabnehmer 12 verwandt, wie er in der Figur 3 dargestellt ist. Dieser Stromabnehmer hat einen im Wesentlichen kreisförmigen oberen Abschnitt 15 und einen sich an diesen anschließenden kastenförmigen Abschnitt 13. Der kastenförmige Abschnitt 13 ist mit einer Querbohrung 14 versehen. Diese ist vorgesehen, um mit dem Schaft der Klemmschraube 9 zu korrespondieren, wenn der Stromabnehmer 12 in das Innere 3 des Trägerrohres 1 eingesetzt ist. Über den Umfang des kreisförmigen Abschnittes 15 weist der Stromabnehmer 12 eine Mehrzahl von federnden Kontakten 16 auf, die in ihrer Position zur Position der Stromschienen 5 an der Wandung 4 des Trägerrohres 1 korrespondieren. Von diesen Kontakten 16 laufen Anschlussleitungen 20 zu hier nicht dargestellten Elementen wie Anschnallzeichen, Leselampen, Klingelknöpfen o.ä.

Zur Anbringung des Stromabnehmers 12 innerhalb des Trägerrohres 1 wird der Stromabnehmer 12 durch den Schlitzbereich 2 hindurchgeführt. Hierzu ist seine Breite 17 etwas kleiner als die Breite 18 des Schlitzbereiches 2.

Danach wird der Stromabnehmer 12 um etwa 90° verdreht, bis die Querbohrung 14 parallel zu der Klemmschraube 9 liegt. Für die Verdrehung des Stromabnehmers ist dieser an den hierfür relevanten Kanten mit entsprechenden Abrundungen 19 versehen. Anschließend wird eine Klemmschraube 9 durch einen Klemmklotz 8, die Querbohrung 14 im kastenförmigen Abschnitt 13 des Stromabnehmers 12 und dann in einen Klemmklotz 8 geführt, so dass der Stromabnehmer 12 in dieser Position fixiert ist. Durch Anziehen der Klemmschraube 9 wird auch die axiale Position des Stromabnehmers 12 innerhalb des Trägerrohres 1 festgelegt.

In dieser Stellung ist dann eine elektrische Verbindung der Leitung 20 über die federnden Kontakte 16 mit den Stromschienen 5 gegeben.

Da die Stromabnehmer 12 an jeder beliebigen axialen Position innerhalb des Trägerrohres 1 befestigt werden können, gibt die beschriebene Vorrichtung die Möglichkeit, Stromabnehmer an genau den Stellen zu positionieren, an denen in allernächster Nähe entsprechende Verbraucher wie Lampen, Leuchtzeichen oder Bedienelemente wie Knöpfe etc. vorhanden sind. Man hat somit die Möglichkeit, positionsgenaue Anschlusselemente vorzusehen für Deckenelemente unterschiedlichster Art, die mit darunterstehenden Flugzeugsitzen mit unterschiedlichstem Sitzabstand korrespondieren.

Es sei an dieser Stelle noch einmal erwähnt, dass das Trägerrohr selbst insbesondere vorgesehen ist, um die genannten Deckenelemente zu tragen. Diese können dabei über Klemmklötze und Klemmschrauben getragene Anschlusselemente an dem Trägerrohr 1 befestigt werden.

Das Trägerrohr fungiert somit einerseits als Träger für die Deckenelemente und andererseits als Führung von elektrischen Leitungen zu in diesen Deckenelementen vorgesehenen Bauelementen.

Es ist für den Fachmann naheliegend, dass die Anzahl der innerhalb des Tragrohres vorgesehenen Stromschienen an den entsprechenden Bedarf anzupassen ist. Auch wenn in den oben beschriebenen Darstellungen lediglich sechs Stromschienen dargestellt sind, ist auch eine erheblich höhere oder geringere Zahl möglich.

## Patentansprüche

1. Trägerrohr (1) mit im Inneren (3) des Rohres (1) verlaufenden elektrischen Leitungen, die als Stromschienen (5) zum Inneren (3) des Rohres (1) hin unisoliert innen an der Wandung (4) des Rohres (1) angebracht sind,
**dadurch gekennzeichnet,**
**dass** an ihm Deckenelemente, insbesondere für Flugzeugkabinen, befestigt sind.

2. Trägerrohr gemäß Anspruch 1,
**dadurch gekennzeichnet,**
**dass** die Stromschiene (5) in Längsnuten (6) der Rohrwandung 4 laufen.

3. Trägerrohr gemäß Anspruch 1,
**dadurch gekennzeichnet,**
**dass** die Stromschiene (5) auf einem Träger (10) aus elektrisch isolierendem Material angebracht sind, der parallel zur Längsachse des Rohres (1) in dieses eingebracht ist.

4. Trägerrohr gemäß Anspruch 3,
**dadurch gekennzeichnet,**
**dass** der Träger eine im Wesentlichen flächige Gestalt hat.

5. Trägerrohr gemäß Anspruch 4,
**dadurch gekennzeichnet,**
**dass** der Träger unter elastischer Verformung in eine Ausnehmung (11) des Rohres (1) einsetzbar ist.

6. Trägerrohr gemäß Anspruch 1
**dadurch gekennzeichnet,**
**dass** das Rohr (1) aus faserverstärktem Kunststoff ist.

7. Trägerrohr gemäß Anspruch 1,
**dadurch gekennzeichnet,**
**dass** es einen Längsschlitz (2) aufweist.

8. Trägerrohr gemäß Anspruch 8,
**dadurch gekennzeichnet,**
**dass** es parallel zum Längsschlitz (2) Fixierschienen (7) aufweist, über die mittels Klemmklötzen (8) Deckenelementbefestigungselemente an dem Rohr (1) befestigt sind.

## Claims

1. Carrier tube (1) having electrical conductors running in the interior (3) of the tube (1), which conductors are in the form of busbars (5) mounted, uninsulated towards the interior (3) of the tube (1), internally on the wall (4) of the tube (1),
**characterised in that**
ceiling elements, especially for aircraft cabins, are attached thereto.

2. Carrier tube according to claim 1,
**characterised in that**
the busbars (5) run in longitudinal grooves (6) of the tube wall (4).

3. Carrier tube according to claim 1,
**characterised in that**
the busbars (5) are mounted on a support (10) made of electrically insulating material, which support is installed in the tube (1) parallel to the longitudinal axis thereof.

4. Carrier tube according to claim 3,
**characterised in that**
the support has a substantially sheet-like form.

5. Carrier tube according to claim 4,
**characterised in that**
the support, with resilient deformation, is insertable into a recess (11) in the tube (1).

6. Carrier tube according to claim 1,
**characterised in that**
the tube (1) is made of fibre-reinforced plastics.

7. Carrier tube according to claim 1,
**characterised in that**
it has a longitudinal slot (2).

8. Carrier tube according to claim 8,
**characterised in that**
it has, parallel to the longitudinal slot (2), fixing rails (7) by way of which ceiling element attachment elements are attached to the tube (1) by means of clamping blocks (8).

## Revendications

1. Tube porteur (1) avec des lignes électriques s'étendant à l'intérieur (3) du tube porteur (1), qui sont installées intérieurement sur la paroi (4) du tube (1) sous la forme de barres conductrices (5) isolées par rapport à l'intérieur (3) du tube porteur (1),
**caractérisé en ce**
**que** des éléments de plafond, en particulier pour cabines d'avion, y sont fixés.

2. Tube porteur selon la revendication 1,
**caractérisé en ce**
**que** les barres conductrices (5) courent dans des rainures longitudinales (6) de la paroi de tube (4).

3. Tube porteur selon la revendication 1,
**caractérisé en ce**
**que** les barres conductrices (5) sont installées sur un support (10) en matériau isolant électriquement qui est introduit dans le tube (1) parallèlement à son axe longitudinal.

4. Tube porteur selon la revendication 3,
**caractérisé en ce**
**que** le support a une forme essentiellement plane.

5. Tube porteur selon la revendication 4,
**caractérisé en ce**
**que** le support peut être inséré par déformation élastique dans un évidement (11) du tube (1).

6. Tube porteur selon la revendication 1,
**caractérisé en ce**
**que** le tube (1) est en matière plastique renforcée par fibres.

7. Tube porteur selon la revendication 1,
**caractérisé en ce**
**qu'**il présente une fente longitudinale (2).

8. Tube porteur selon la revendication 8,
**caractérisé en ce**
**qu'**il présente parallèlement à la fente longitudinale (2) des rails de fixation (7) par lesquels des éléments de fixation d'éléments de plafond sont fixés au tube (1) au moyen de plots de serrage.
